# EUROPEAN PATENT APPLICATION

(11) **EP 4 813 939 A1**
(43) Date of publication of application: **30.09.2026**
(21) Application number: 25166983.4
(22) Date of filing: 28.03.2025
(51) Int. Cl.: C03B 23/045, C03B 23/09

(54) **METHOD AND APPARATUS FOR THE PRODUCTION OF GLASS TUBES WITH CLOSED ENDS**

(71) Applicant: SCHOTT AG, 55122 Mainz (DE)
(72) Inventor: ZEITLER, Jonas, 95666 Mitterteich (DE); BRAUN, Patrick, 95666 Mitterteich (DE); GEIHE, Christian, 95666 Mitterteich (DE); HAMANN, Carsten, 95666 Mitterteich (DE); MOSELER, Doris, 55122 Mainz (DE); SCHMIDT, Jan-Niklas, 55122 Mainz (DE); KORB, Thomas, 55122 Mainz (DE)
(74) Representative: Schott Corporate IP

(57) **Abstract**

Method for the manufacture of a glass tube with closed ends and a ventilation hole, comprising the steps of providing a glass tube with open ends, opening a ventilation hole in a wall of the glass tube near one of the ends of the glass tube, closing a first end of the glass tube, closing a second end of the glass tube, and introducing a gas into the glass tube through the ventilation hole with a radial gas supply, during at least one of the closings of the first or second end of the glass tube.

## Description

The present invention relates to a method and an apparatus for the sealing of glass tubes in a hot softened state, especially of glass tubes, which are intended for the production of primary packaging means made of glass for the storage of pharmaceutically active substances.

In the production of glass tubes usually glass tubes are severed from the glass tube line produced with for example a Vello or Danner process, which are then processed further. These glass tubes may have standard lengths of e.g., 1.5 m, but may also be severed off in other lengths in order to be processed to primary packaging means for the storage of pharmaceutical substances, for example glass ampoules, glass vials, glass cartridges or glass syringes. For such applications, it is preferable that no impurities reach the interior of the glass tubes in the course of processing and handling, as these can be removed from it again only with considerable effort. Therefore, the tube ends are severed off in a hot softened state directly at the glass tubing production in a special tube end processing machine and the tubes are sealed therewith and provided with a ventilation hole to prevent a deposition of particles inside the glass tube during further processing or transport.

Doubly closed glass tubes as described above are preferred for further processing like the production of primary packaging for pharmaceutical substances, as due to the closure at both ends, risk of contamination of the inner wall of the glass tube during transport and storage is significantly reduced. In addition, due to the closed ends, the glass tubes are very robust and can withstand a lot of handling abuse without breaking. This is highly desirable for transport and further processing as loss to unintended damage is highly reduced.

These glass tubes are provided with both ends closed as well as a ventilation hole made in the wall of the glass tube near one of the closed ends. The ventilation hole ensures that no problems occur due to variations in gas pressure during transport and storage. Methods for producing closed tubes are known in the art, for example from US 9458045 and EP4023615.

The known methods have the disadvantage that the inner surface in the vicinity of a closed tube end can exhibit deposits called lamp rings. Such deposits appear in particular when the glass tubes are made out of borosilicate glass that has been refined with chloride in the melting stage. These ring-shaped deposits are present as clearly untransparent and milky, appearing in an area located up to 5 cm from the ends of the glass tube consisting of particles smaller than 0.1 mm. These lamp rings are unwanted, as they effect the glass tube visual quality. In addition, the inventors have found, that the known methods also result in closed glass tubes that exhibit further defects/imperfections of the glass inner wall, mostly in the end sections extending from at least 5 cm from the closed tube end to about 5 cm into the inner of the tube, occasionally as far as 40 cm. and especially, when the tubes were made out of chloride fined borosilicate glass. This kind of defects, consisting of dendritic crystal structures having a dimension greater than 0,1 mm and having a NaCl composition, has a huge drawback as it also effects the glass tube visual quality. When in this text reference is made to defects this always refers to the NaCl dendritic crystal structures. These defects can occur already some hours after production up to several days or weeks after production while in storage or transport, e.g. when closed tubes produced by the methods known in the art are stored at ambient of 20°C and ambient relative humidity of up to 100 % for at least 7 days. The frequency and intermittent nature with which these obvious defects occur, makes it difficult to produce the tubes in economically viable quantities, that is with a low percentage of defective tubes. This is in particular problematic as chloride fined borosilicate glass is a highly desired glass for manufacturing of pharmaceutical container, like vials, ampules and syringes. Therefore, there exist a need for a solution to provide reliably relatively defect free (directly after production as well as during transport and storage) chloride fined borosilicate glass tubes in the robust and desirable double closed format.

It is therefore an object of the invention to provide for a method for the production of closed glass tubes that result in reliable defect free closed glass tubes, as well as defect free closed glass tubes made out of chloride refined borosilicate glass.

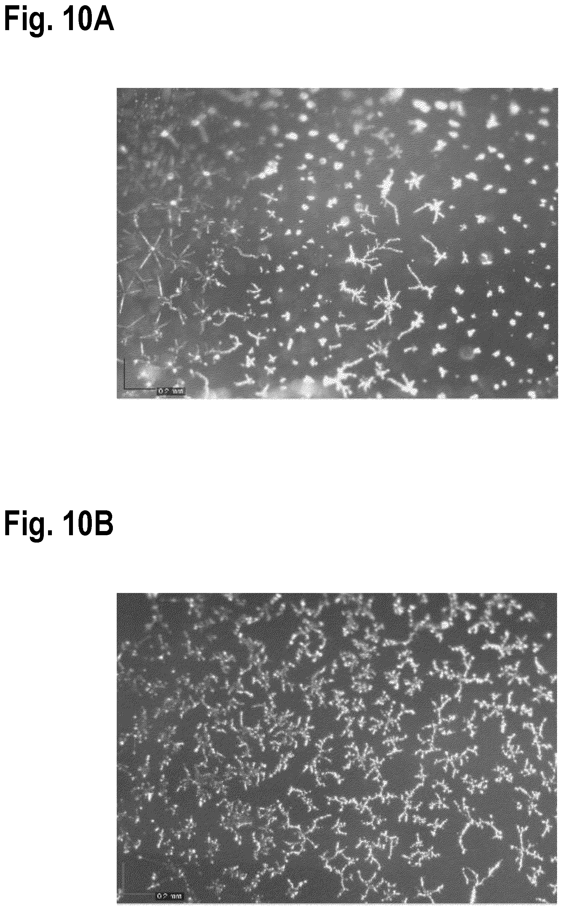

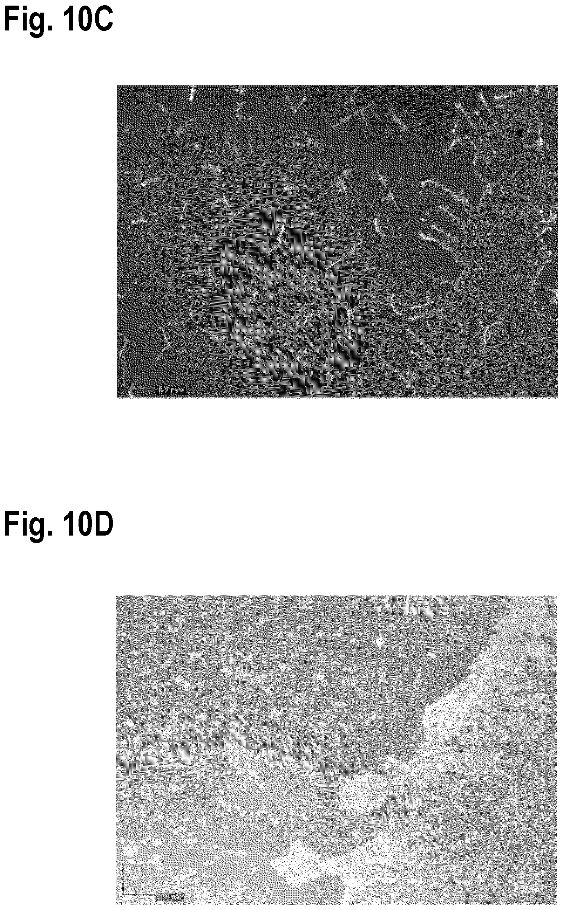

For state-of-the-art tubes made out of borosilicate glass, the defects found in the inner wall of the tube are mostly formed of dendritic crystal structures made out of NaCl that form part of the inner wall of the tube and are mostly located near the ends of the tube, and typically in areas up to 5-15 cm (maximum 40 cm) from the respective end of the tube. These crystal structures form part of the inner wall, and can therefore not be removed with blowing of (compressed) air, in other words, the structures are fixed on the inner wall of the tube. The chemical composition of the crystal structures has been identified to be NaCl by means of EDX (energy dispersive x-ray spectroscopy) and TOF-SIMS (time of flight secondary ion mass spectrometry) analysis. The defects are whitish in appearance and stand out clearly against the otherwise transparent glass tube. This can be easily seen by means of standard optical inspection methods commonly used in tube manufacturing. The defects are present in various shapes and sizes like small nucleation sites (like dots), dendritic lines, irregular multi line dendritic or snow-flake-like shapes. In fig. 10, several examples of these shapes are shown in the form of pictures of four samples. Fig. 10 shows four different defect types, note that these are not the only defect types. Fig. 10A and fig. 10B show typical snow-flake shaped defects. Fig. 10C shows a more line type defect, and Fig. 10D shows a more complex ice flower shape. Note that these four pictures have a scale indication to indicate a 0.2 mm length. Note that these four examples are not limiting, and defects that are larger and smaller also can occur. A defect can also be made up of a collection of closely spaced smaller defects. Using optical inspection methods, for example using an optical microscope with a 60x magnification under lightning with a lightbox, defects with a minimal dimension of 0.1 mm can be detected. The dimension of a defect is defined as the largest line that will fit within the perimeter of the defect. This is also the case for a defect that is composed of closely spaced smaller defects. Very small defects like 0.1 mm are mostly essentially round, so the dimension of the defect is the radius of the defect. For line shaped defects, the dimension is essentially the length of the line. For this purpose, light from a cold light source was coupled into the tube wall via the curved tube base so that any defects in the surface can be identified more easily by the scattered light. To further increase the contrast to the surroundings, the tube was examined in a cardboard box lined with a black background. Using this optical inspection test, defect free tubes are defined as having no visible defects optically detectable with a dimension of 0.1 mm or larger. In general, methods for determining the presence and approximate size of visible defects in glass products are widely known in the art.

Glass tubes that were processed using the method according to the invention resulted in tubes that were optically defect free with the test indicated above. The tubes were defect free immediately after manufacture and remained so even after being stored over an extended period of time, for example 7 days or longer.

Details of the invention will be described in the following under reference to the figures in which;
Figure 1 shows a first embodiment,
Figure 2 shows a second embodiment,
Figure 3 shows a third embodiment,
Figure 4 shows a fourth embodiment,
Figure 5 shows a fifth embodiment,
Figure 6 shows a side view of a gas supply,
Figure 7 shows a 3 D view of a gas supply,
Figure 8 shows a sixth embodiment,
Figure 9 shows a seventh embodiment, and
Figure 10A-D shows photos of NaCl dendritic structures.

Methods and devices for closing ends of glass tubes as mentioned before as the use of a closing tool to close the end of the glass tube are known in the art, for example from US 10315946. In general, the end to be closed is heated up (for example with a gas burner) so that the glass is softened, and the end is closed using either a forming tool to physically form the closure or let the now softened end fall in on itself due to gravity thereby closing off the end of the glass tube. During these kind of closing methods, the glass tubes can be rotated around their circumferential axis to improve the closing process. According to the invention any suitable closing method or device can be used, heating with a gas burner, laser or a plasma burner Typically, the tubes to be processed are moved along a transport track where the tubes are moved in a direction perpendicular to the axial axis of the tubes. Here they pass several workstations that perform the required steps of closing the ends and opening the ventilation hole. Such tracks provide usually a transport plane that is horizontal or on a slight slope.

Tools and methods for making a ventilation hole in a glass tube wall are known in the art. According to the invention, any suitable method for providing a ventilation hole in the tube wall can be employed. For example, a gas-powered spot burner can be employed, that melts the glass wall to form an opening. A plasma burner is also suitable. A plasma burner is in particular suitable as due to its technical nature does not generate a lot of water vapor, which is a suspected factor in the generation of NaCl crystal defects. Preferably, the burner is located above the glass tube when making the hole, as gravity will assist in forming a uniform edge to the formed opening, but other positions are also usable. The location of the ventilation hole is preferably near the closed end of the glass tube, as the section of the tube between the ventilation hole and the closest closed end of the glass tube can typically not be further processed. The ventilation hole can be positioned between 0.5 and 5 cm from the closed end, with shorter distances being preferable, like 0.5 -2.5 cm or 0.5 to 1.0 cm.

The ventilation hole has preferably a round shape, and a diameter of between 1.5 and 2.5 mm, with a tolerance of for example -0.5 mm to +1.25 mm. This size range has the advantage that it allows for gas to be blown into the opening; other sizes can also be used, preferably so that gas can be blown into the opening from the outside of the glass tube.

In the description of the invention, an axial gas supply is used. The axial gas supply provides a stream of gas in the axial direction of the tube being processed, which enables the gas to enter the glass tube through the end exposed to the axial gas supply. Such axial gas supplies are known in the art and have an outlet to expel a stream of gas so that it can freely enter an open end of the tube being processed. The outlet of the gas supply can for example be implemented as a nozzle or for example a diffuser. The outlet is lined up axially with the glass tube so that the gas being expelled out of the outlet enters the tube. Note that the gas can enter the tube whether the tube is stationary or rotating along its axial axis.

Further a radial gas supply is used that provides a stream of gas in the radial direction of the tube being processed. The axial gas supply has an outlet to expel a stream of gas directed towards the tube in a radial direction. The outlet is lined up with the position of the ventilation hole along the axial axis of the tube, so that it can freely enter the ventilation hole in the wall the tube being processed when the gas stream is facing the ventilation hole. The outlet of the gas supply can for example be implemented as a nozzle, a radial exit surrounding the circumference of the tube or a diffuser. In one example the radial gas supply comprises an outlet in the form of a stationary nozzle pointed towards the tube, where the tube (and therefore the ventilation hole as well) is being rotated. The gas enters the ventilation hole during the phase of the rotation when the ventilation hole lines up with the gas supply. In another example the nozzle or outlet is mounted so that it can rotate around the axial axis of the tube, and keep its position lined up with the ventilation hole. In another example the outlet is positioned surrounding the tube, with a circumferential outlet pointing toward the tube and lined up with the ventilation hole; in this case gas can enter in all positions of the ventilation hole, whether the tube is stationary or rotating. In an embodiment of this implementation, the axial gas supply can be implemented as a two-piece collar for easy mounting.

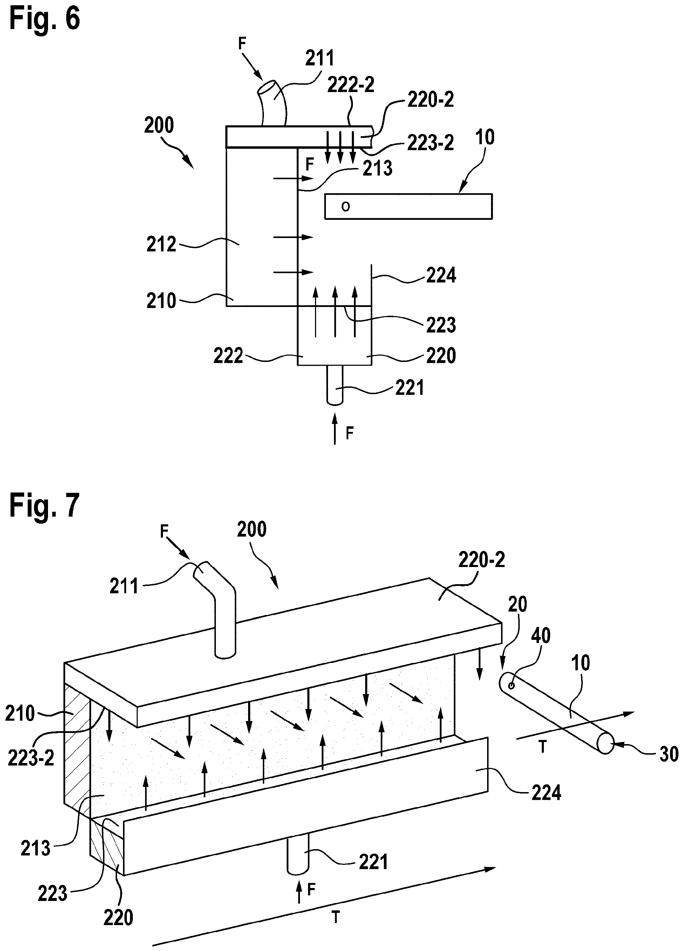

A further example of a combined axial and radial gas supply is shown in figures 6 and 7. Figures 6 and 7 show a gas supply 200. It comprises an axial gas supply section 210 and a lower radial gas supply section 220 and an upper radial gas supply section 220-2. The axial gas supply section 210 is provided with a gas inlet 211 that connects to an inner chamber 212 of the axial gas supply section 210. The inner chamber 212 is connected to an axial gas outlet, in this example embodied as a perforated plate 213, that functions as a diffuser to provide a constant gas flow over the surface of the axial gas outlet. In use, the inlet 211 is connected with a gas source that provides a gas F under pressure to the chamber 212, so that the gas exits the chamber through the axial outlet 213, in the direction indicated by arrows in fig. 6 and 7.

The lower radial gas supply section 220 is provided with a gas inlet 221 that connects to an inner chamber 222 of the radial gas supply section 220. The inner chamber 222 is connected to a radial gas outlet 223, in this example embodied as a perforated plate 223, that functions as a diffuser to provide a constant gas flow over the surface of the radial gas outlet. In use, the inlet 221 is connected with a gas source that provides a gas under pressure to the chamber 222, so that the gas exits the chamber through the radial outlet 223, in the direction indicated by arrows in fig. 6 and 7.

The upper radial gas supply section 220-2 is connected to the gas inlet 211 that connects to an inner chamber 222-2 of the upper radial gas supply section 220-2. The inner chamber 222-2 is connected to an upper radial gas outlet 223-2, in this example embodied as a perforated plate, that functions as a diffuser to provide a constant gas flow over the surface of the upper radial gas outlet. In use, the inlet 211 is connected with a gas source that provides a gas under pressure to the chamber 222-2, so that the gas exits the chamber through the radial outlet 223-2, in the direction indicated by arrows in fig. 6 and 7.

In a variant of this embodiment, either the upper or lower radial gas supply can be replaced (while maintain the opposite radial gas supply to ensure radial gas flow) by an axial shield that extends away from the gas supply 200 in the axial direction to provide some shielding for the gas expelled from the axial outlet 213, to improve the gas flow in the axial direction. This reduces the complexity of the construction, while still maintaining a useful level of functionality.

The gas supply 200 is further provided with a radial shield 224 that extends away from the gas supply 200 in the radial direction to provide some shielding for the gas expelled from the radial outlet 223, to improve the gas flow in the radial direction. Shield 224 provides some containment of the respective gas flows through the axial and radial outlets to improve efficiency but are optional and the gas supply 200 will function without.

As indicated in fig. 7, the gas supplies 210, 220, 220-2 extend laterally in a direction indicated with T in the Fig. 7. In use, a glass tube 10 to be treated is moved along the gas supply 200 in the direction T. The glass tube 10 is positioned so that its axial axis lines up with the axial direction of the gas supply 200 and the tube 10 is positioned so that one end (in this example open end 20 provided with a ventilation hole 40) is between the upper and lower radial outlets 223-2 so that air expelled from the radial outlets 223, 223-2 can enter the ventilation hole 40. Note that during transport of the tube 10 along the gas supply the tube is rotating so that the ventilation hole 40 regularly faces the radial outlets 223, 223-2 to enable gas to enter the ventilation hole 40 during the transport along the gas supply 20.

In practical application, the gas supply 200 would be mounted horizontally, and therefore the transport direction of the glass tube would be also horizontal and in the same plane. Alternatively, if the gas supply 200 is for example part of a production line that has a transport plane that is not horizontal, but under an angle, the gas supply can be angled to conform to the angled transport plane.

The gas used is preferably a non-reactive gas, that does not interfere with the closing process or interfere with the surface of the glass tube. The gas is used to replace air already present within the tube. Blowing the gas into the glass tube during processing leads to a significant reduction or full elimination of internal contamination of the glass tube by blowing out particles or gasses. Advantageous is a gas that is able to absorb water vapor. Preferably, the gas is not fully saturated with water vapor, and lower saturation is preferred, so that water vapor can be better removed from the glass tube. An example for a gas to be used is air, like ambient air. Other examples would be nitrogen gas, carbon dioxide gas, or a mixture thereof or other non-reactive engineering gases (like noble gasses like argon). Gases that are reactive in the sense that they bind with water can also be used, as the use of these also reduces the humidity of the gas. Preferably, the gas is filtered to prevent unwanted particles to enter the glass tube to be closed. Gas filtration methods are known in the art, for example by means of a physical filter. A relative humidity of below 30% is advantageous, with further advantages when below 20% or below 5%. A relative humidity between 20% to 5% provides a good compromise.

In the following several examples of embodiments of methods to produce glass tubes according to the invention are shown and described. The goal for all methods is to close both ends 20, 30 of the tube 10 and open a ventilation hole 32 in the wall of the glass tube 10, where the ventilation hole is in the vicinity of one of the ends 20, 30.

The tubes to be processed are moved along a transport track where they pass several workstations that perform the required steps of closing the ends and opening the ventilation hole, as well as the respective blowing out steps. Alternatively, the tube to be processed can be held stationary, with the respective tools being used being switched out as required by the method steps.

In the following several examples of manufacturing processes according to the invention will be described. In the following several tools and implements are described, in particular an opening tool 70, an axial gas supply 60, a radial gas supply 80 and a closing tool 50. The opening tool 70 and the closing tool 50 are state of the art, as described above. Implementations of the radial and axial gas supply are described above and can also be implemented as the gas supply 200 described above.

In the following, the glass tubes can be made of any glass type that is suitable for use as base material for primary pharma packaging, like vials, cartridges, ampules, and syringes. In particular, borosilicate glass can be used. In particular, borosilicate glass that was refined with chloride in the melting stage is suitable. The glass may be a silicate glass, such as a borosilicate glass. The glass tube may consist of a glass comprising the following oxides, in percent (%) by weight, based on the total amount of glass:

| | |
|---|---|
| SiO₂ | 50-90 |
| B₂O₃ | 0-20 |
| Al₂O₃ | >0 - 18 |
| Na₂O | 0-15 |
| K₂O | 0-5 |
| Li₂O | 0-2 |
| CaO | 0-15 |
| BaO | 0-6 |
| ZrO₂ | 0 -5 |
| TiO₂ | 0-5 |
| Fe₂O₃ | 0-3 |

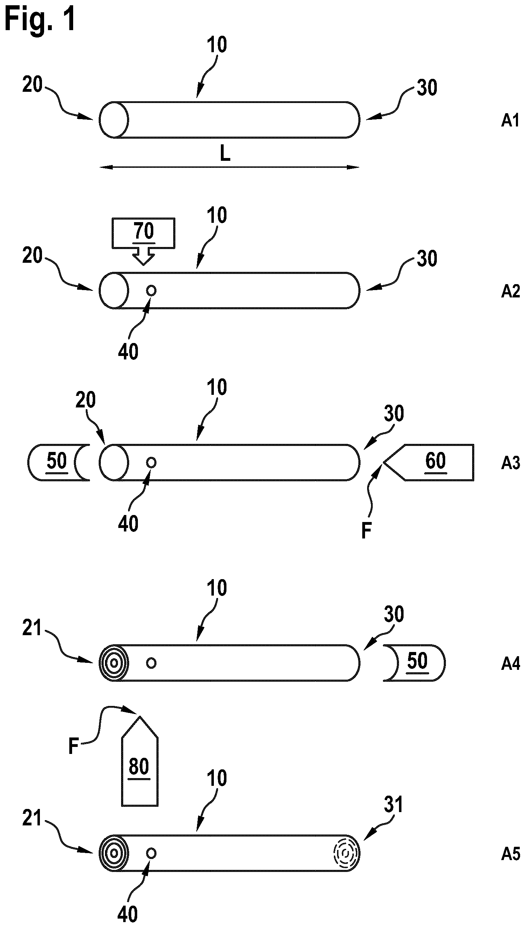

The process of manufacturing a glass tube according to a first embodiment will be shown in reference to fig. 1. Fig.1 at A1 shows providing a glass tube 10, with a length of L, having a first end 20 and a second end 30 (both ends open at the start) at the distal ends of the tube 10. The glass tube 10 has a circumferential wall and encloses an inner space. In this example the length L is around 1.5 m, but other lengths are also possible. Lengths of 0.5 to 2.0 m are preferable as having the advantage of providing a useful length for transport as well as for further processing. The glass tubes have typically an outer diameter in the range of 5 mm to 40 mm and a wall thickness of between 0.5 mm and 4 mm, although the invention is not limited to these specific ranges.

In a step A2, shown in Fig. 1, a ventilation hole 40 is made into the wall of the glass tube near the first end 20 of the glass tube 10, by means of an opening tool 70, for example a spot burner. Optionally, during the opening operation of step A2, the tube can be axially blown out using an axial gas supply 60, from either side.

After step A2, that is after the formation of the ventilation hole has been completed, optionally the tube can be blown out using a gas supply 60, from either side. In this case, the next step A3 is performed after the tube has been blown out.

In a next step A3, the first end 20 is closed using a closing tool 50, for example one disclosed in US 10315946. During the closing of the first end 20, gas F is blown into the second end 30 of the glass tube by means of an axial gas supply 60. The gas F is blown into the tube 10 in the direction towards the first end 20 in the axial direction of the tube 10, so that the gas F enters the inner space of the tube 10, and preferably fills the inner space of the tube 10, replacing the previously present gas or air and optionally removing loose particles (if present). Note that the gas can escape through the first opening 20 until the opening 20 is fully closed. The gas F can also escape through the ventilation hole 40, even after the opening 20 is fully closed. In a variant of this step, the start of blowing of the gas F into the second end 30 is started before the start of the closing of the first end 20. The gas supply 60 is stopped once the first end 20 is fully closed. In a variant of this step, the gas supply can be stopped before the first end 20 is fully closed. The now closed first end is indicated as 21 in the fig. 1 step A4..

In the subsequent step A4, shown in Fig. 1, the second end 30 of the glass tube 10 is closed, also using a closing tool 50. During the closing of the second end 30, gas F is blown into the ventilation hole 40 near the first end 20 of the glass tube 10 by means of a radial gas supply 70. The gas F is blown into the tube 10 in the direction towards the ventilation hole 40 in the radial direction of the tube 10, so that the gas F enters the inner space of the tube 10, and preferably fills the inner space of the tube 10, replacing the previously present gas and loose particles (if present). Note that the gas can escape through the second opening 30 until the opening 30 is fully closed. In a variant of this step, the start of blowing of the gas F into the ventilation hole 40 is started before the start of the closing of the second end 30. The radial gas supply 70 is stopped once the second end 30 is fully closed, or alternatively before the second end 30 is fully closed. The now closed second end of the tube 10 is indicated with 31. Preferably, this step is started within a short period of time after finishing the step A3. This short period of time can for example be 5 to 15 seconds.

In Fig. 1 at A5 the end product is shown, in the form of tube 10 now with both closed ends 21, 31 and ventilation hole 40.

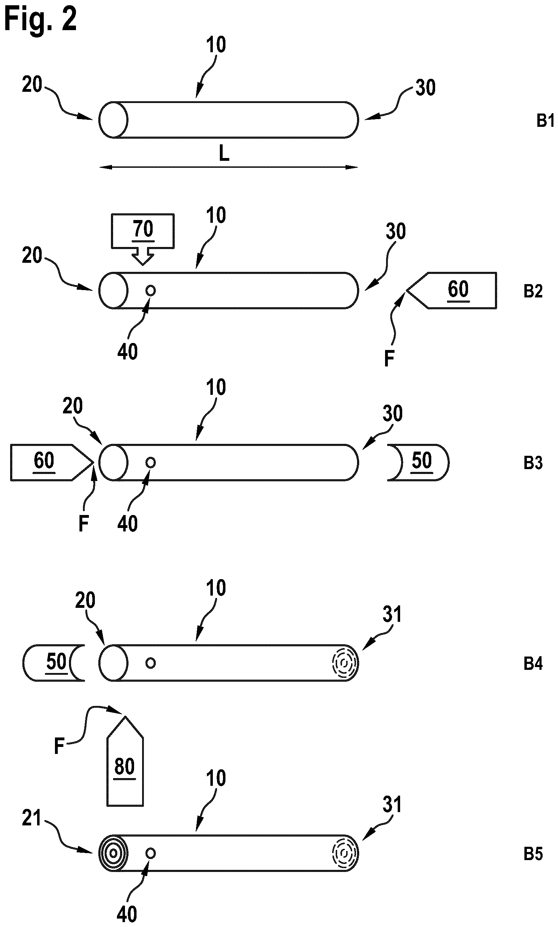

The process of manufacturing a glass tube according to a second embodiment will be shown in reference to fig. 2. Fig. 2 step B1 shows providing a glass tube 10 having a first end 20 and a second end 30 at the distal ends of the tube 10.

In a step B2, shown in Fig. 2, a ventilation hole 40 is made into the wall of the glass tube near the first end 20 of the glass tube 10, by means of an opening tool 70.

During the opening of the ventilation hole, the tube can optionally be blown out using a gas supply 60, blowing gas into the second end 30.

After step B2, that is after the formation of the ventilation hole has been completed, optionally the tube can be blown out using a gas supply 60, from either side. In this case, the next step B3 is performed after the tube has been blown out.

In subsequent step B3, the second end 30 is closed using a closing tool 50, for example one disclosed in US 10315946. During the closing of the second end 30, gas F is blown into the first end 20 of the glass tube by means of an axial gas supply 60. The gas F is blown into the tube 10 in the direction towards the first end 20 in the axial direction of the tube 10, so that the gas F enters the inner space of the tube 10 and preferably fills the inner space of the tube 10, replacing the previously present gas or air and optionally removing loose particles (if present). Note that the gas can escape through the second opening 30 until the opening 30 is fully closed. The gas F can also escape through the ventilation hole 40, even after the opening 30 is fully closed. In a variant of this step, the start of blowing of the gas F into the first end 32 is started before the start of the closing of the second end 30. The gas supply 60 is stopped once the second end 30 is fully closed. In a variant of this step, the gas supply can be stopped before the second end 30 is fully closed. The now closed first end is indicated as 31 in the fig. 2 step B4.

In subsequent step B4, the first end 20 is closed using closing tool 50; during the closing of the first end 20, gas F is blown into the ventilation hole 40 near the first end 20 of the glass tube 10 by means of a radial gas supply 80. The gas F is blown into the tube 10 in the direction towards the ventilation hole 40 in the radial direction of the tube 10, so that the gas F enters the inner space of the tube 10, and preferably fills the inner space of the tube 10, replacing the previously present gas. The gas F can escape through the first end 20 of the tube until it is fully closed. The axial gas flow can be stopped once the first end 20 is fully closed by the closing tool 50.

In Fig. 2 at B5 the end product is shown, in the form of tube 10 now with both closed ends 21, 31 and ventilation hole 40.

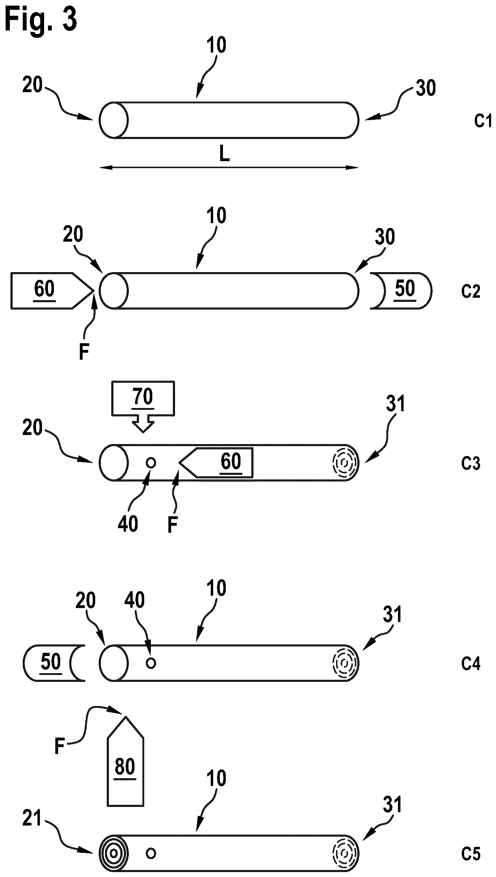

The process of manufacturing a glass tube according to a second embodiment will be shown in reference to fig. 3. Fig. 3 step C1 shows providing a glass tube 10 having a first end 20 and a second end 30 at the distal ends of the tube 10.

In subsequent step C2, the second end 30 is closed using a closing tool 50, for example one disclosed in US 10315946. During the closing of the second end 30, gas F is blown into the first end 20 of the glass tube by means of an axial gas supply 60. The gas F is blown into the tube 10 in the direction towards the first end 20 in the axial direction of the tube 10, so that the gas F enters the inner space of the tube 10, and preferably fills the inner space of the tube 10, replacing the previously present gas or air and optionally removing loose particles (if present). Note that the gas can escape through the second opening 30 until the opening 30 is fully closed. In a variant of this step, the start of blowing of the gas F into the first end 20 is started before the start of the closing of the second end 30. The gas supply 60 is stopped once the second end 30 is fully closed. In a variant of this step, the gas supply can be stopped before the second end 30 is fully closed. The now closed first end is indicated as 31 in the Fig. 3 step C3.

In subsequent step C3, a nozzle head 65 for internally blowing out a glass tube is inserted into the tube through the open end. Such nozzle heads are known in the art, for example in EP 3967408. With the nozzle head 65, gas F can be introduced into the glass tube 10, making the gas F flow towards the open end 20. With an opening tool 70 a ventilation hole 40 is made into the wall of the glass tube near the first end 20 of the glass tube 10, during which operation the nozzle head 65 supplies gas into the tube, leaving the tube through the still open end 20 until the ventilation hole 40 has been formed, alternatively the gas flow can be stopped before the ventilation hole 40 is fully formed. After the ventilation hole 40 is made, the nozzle head 65 is removed from the tube.

In subsequent step C4, the first end 20 is closed using closing tool 50; during the closing of the first end 20, gas F is blown into the ventilation hole 40 near the first end 20 of the glass tube 10 by means of a radial gas supply 80. The gas F is blown into the tube 10 in the direction towards the ventilation hole 40 in the radial direction of the tube 10, so that the gas F enters the inner space of the tube 10, and preferably fills the inner space of the tube 10, replacing the previously present gas. The gas F can escape through the first end 20 of the tube until it is fully closed. The axial gas flow can be stopped once the first end 20 is fully closed by the closing tool 50.

In fig. 3 at step C5 the end product is shown, in the form of tube 10 now with both closed ends 21, 31 and ventilation hole 40.

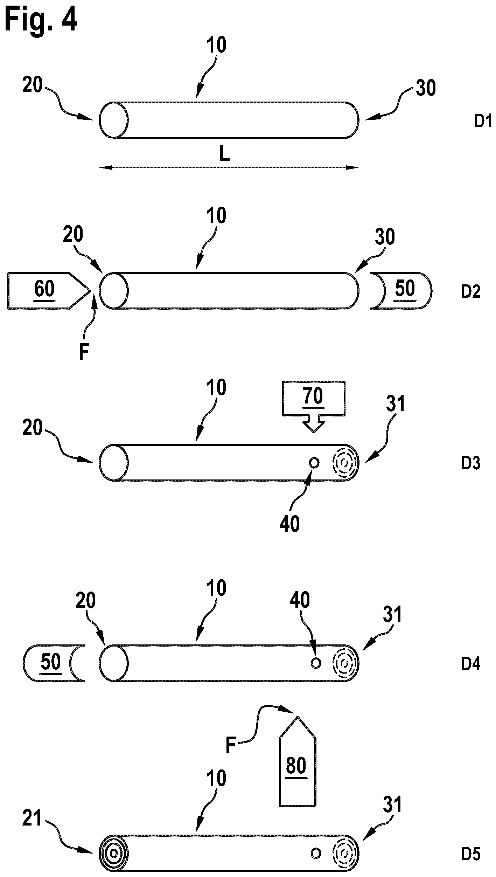

The process of manufacturing a glass tube according to a fourth embodiment will be shown in reference to Fig. 4. Fig. 4 step D1 shows providing a glass tube 10, with a length of L, having a first end 20 and a second end 30 at the distal ends of the tube 10.

In a subsequent step D2, shown in fig. 4, the second end 30 is closed using a closing tool 50, for example one disclosed in US 10315946. During the closing of the second end 30, gas F is blown into the first end 20 of the glass tube by means of an axial gas supply 60. The gas F is blown into the tube 10 in the direction towards the first end 20 in the axial direction of the tube 10, so that the gas F enters the inner space of the tube 10, and preferably fills the inner space of the tube 10, replacing the previously present gas or air and optionally removing loose particles (if present). Note that the gas can escape through the second opening 30 until the opening 30 is fully closed. In a variant of this step, the start of blowing of the gas F into the first end 20 is started before the start of the closing of the second end 30. The gas supply 60 is stopped once the second end 30 is fully closed. In a variant of this step, the gas supply can be stopped before the second end 30 is fully closed. The now closed first end is indicated as 31 in the fig. 4 step D3.

In subsequent step D3, with an opening tool 70 a ventilation hole 40 is made into the wall of the glass tube near the second end 30 (now closed) of the glass tube 10. Optionally, gas F can be introduced during the opening of the ventilation hole 40 into the open end 20.

In subsequent step D4, the first end 20 is closed using closing tool 50; during the closing of the first end 20, gas F is blown into the ventilation hole 40 near the second end 30 of the glass tube 10 by means of a radial gas supply 80. The gas F is blown into the tube 10 in the direction towards the ventilation hole 40 in the radial direction of the tube 10, so that the gas F enters the inner space of the tube 10, and preferably fills the inner space of the tube 10, replacing the previously present gas. The gas F can escape through the first end 20 of the tube until it is fully closed. The axial gas flow can be stopped once the first end 20 is fully closed by the closing tool 50.

In Fig. 4 at D5 the end product is shown, in the form of tube 10 now with both closed ends 21, 31 and ventilation hole 40.

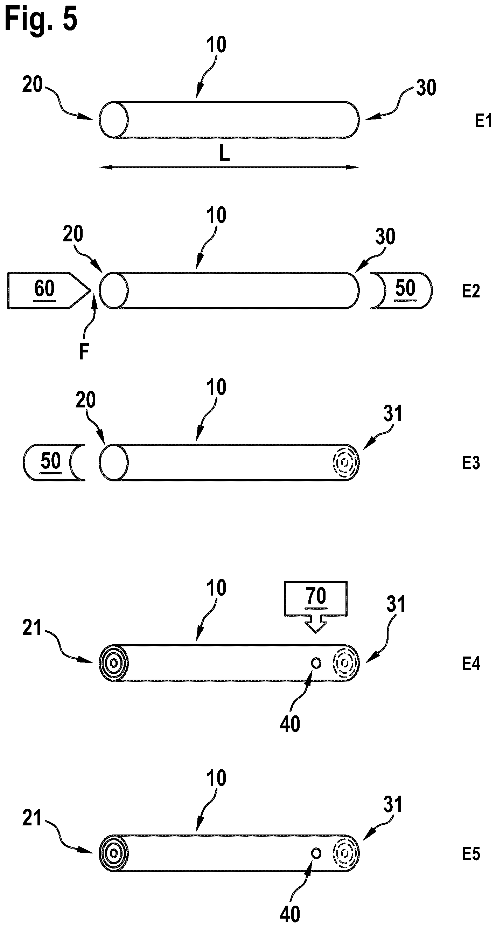

The process of manufacturing a glass tube according to a fifth embodiment will be shown in reference to Fig. 5. Fig. 5 step E1 shows providing a glass tube 10, with a length of L, having a first end 20 and a second end 30 at the distal ends of the tube 10.

In subsequent step E2, the second end 30 is closed using a closing tool 50, for example one disclosed in US 10315946. During the closing of the second end 30, gas F is blown into the first end 20 of the glass tube by means of an axial gas supply 60. The gas F is blown into the tube 10 in the direction towards the first end 20 in the axial direction of the tube 10, so that the gas F enters the inner space of the tube 10, and preferably fills the inner space of the tube 10, replacing the previously present gas or air and optionally removing loose particles (if present). Note that the gas can escape through the second opening 30 until the opening 30 is fully closed. In a variant of this step, the start of blowing of the gas F into the first end 20 is started before the start of the closing of the second end 30. The gas supply 60 is stopped once the second end 30 is fully closed. In a variant of this step, the gas supply can be stopped before the second end 30 is fully closed. The now closed first end is indicated as 31 in the fig.5 at E3.

In subsequent step E3, the first end 20 is closed using closing tool 50. The closed end 21 is indicated in Fig. 5 at E4.

In subsequent step E4, a ventilation hole 40 is opened into the wall of the glass tube 10 near the second end 31 (now closed) of the glass tube 10 with an opening tool 70. Alternatively, the ventilation hole 40 can be made into the wall of the glass tube 10 near the first closed end 21.

In Fig. 5 at E5 the end product is shown, in the form of tube 10 now with both closed ends 21, 31 and ventilation hole 40.

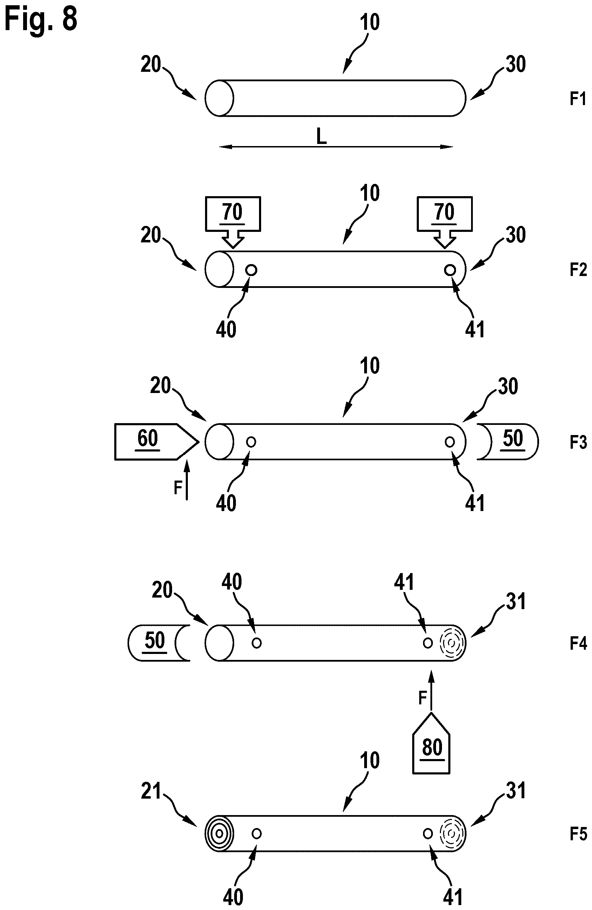

The process of manufacturing a glass tube according to a sixth embodiment will be shown in reference to Fig. 8. Fig. 8 at F1 shows providing a glass tube 10, with a length of L, having a first end 20 and a second end 30 at the distal ends of the tube 10.

For this embodiment, two ventilation holes are used, one each at or near the distal ends of the tube 10. Note that this example is not limiting, and other embodiments with two ventilation holes positioned not near the distal ends are also possible.

In a step F2, shown in Fig. 8, a ventilation hole 40 is opened into the wall of the glass tube near the first end 20 of the glass tube 10, by means of an opening tool 70. Additionally, a ventilation hole 41 is opened into the wall of the glass tube 10 near the second end 30 of the glass tube, by means of an opening tool 70. The ventilation holes 40, 41 can be made consequently or simultaneously. Preferably, both holes 40, 41 are made at similar distances from the respective end of the tube. This has the advantage that the resulting tube is symmetrical, which is beneficial for further processing, as both ends are the same with respect to the axial location of the ventilation holes. The radial position of the ventilation holes can be the same, this has the advantage of the holes lining up with the axial axis of the tube and therefore making inspection of the tube easier as both ventilation holes are visible at the same time. However, the ventilation holes can also be located at different radial positions, this can be beneficial for processing effectiveness as the tube does not require a specific radial rotation to form the ventilation hole.

During or after the manufacturing of the ventilation holes, the tube can optionally be blown out using a gas supply 60, blowing gas axially into either of the ends 20, 30, to fully or partially replace the gas in the tube.

In a subsequent step F3, shown in Fig. 8, the second end 30 is closed using a closing tool 50, for example one disclosed in US 10315946. During the closing of the second end 30, gas F is blown into the first end 20 of the glass tube by means of an axial gas supply 60. The gas F is blown into the tube 10 in the direction towards the first end 20 in the axial direction of the tube 10, so that the gas F enters the inner space of the tube 10 and preferably fills the inner space of the tube 10, replacing the previously present gas or air and optionally removing loose particles (if present). Note that the gas F can escape through the second opening 30 until the opening 30 is fully closed, in addition to ventilation hole 41. After fully closing the opening 30, the gas can continue to escape through the ventilation hole 41. In a variant of this step, the start of blowing of the gas F into the first end 20 is started before the start of the closing of the second end 30. The gas supply 60 can be stopped once the second end 30 is fully closed, or can be kept flowing to continue replacing the internal gas in the tube by exiting the gas through the ventilation hole 41. This continued gas flow has the advantage to further improve removal of unwanted gas and/or particles inside the tube. In a variant of this step, the gas supply can be stopped before the second end 30 is fully closed. In a further variant, the tube with the closed second end can be annealed using a known method and subsequently being blown out after the annealing using an axial gas supply. This blowing out will remove any moisture created within the tube due to the annealing process. The now closed first end is indicated as 31 in the Fig. 8 at step F4. Note that during the gas being blown, some of the gas can escape also through the ventilation hole 40 close to the first end 20.

In subsequent step F4, the first end 20 is closed using closing tool 50; during the closing of the first end 20, gas F is blown into the ventilation hole 41 near the second end 30 of the glass tube 10 by means of a radial gas supply 80. The gas F is blown into the tube 10 in the direction towards the ventilation hole 41 in the radial direction of the tube 10, so that the gas F enters the inner space of the tube 10, and preferably fills the inner space of the tube 10, replacing the previously present gas. The gas F can escape through the ventilation hole 40 at the end 20 of the tube, as well as the end 20 itself until it is fully closed. The axial gas flow can be stopped once the first end 20 is fully closed (forming the closed end 21) by the closing tool 50. Alternatively, the gas flow can be kept flowing even after fully closing the end 20, where the gas can escape through the ventilation hole 40. By blowing gas through the tube while fully closing the tube, the resulting closed tube is showing little to no detectible residues.

In fig. 8 at F5 the end product is shown, in the form of tube 10 now with both closed ends 21, 31 and associated ventilation holes 40, 41.

In a variant of the embodiment shown in fig. 8, the respective ventilation holes can be formed during different steps. For example, in step F2 only a first hole can be formed, and the second hole can be formed after finishing step F3. In general, it is beneficial to have both holes formed before starting step F4.

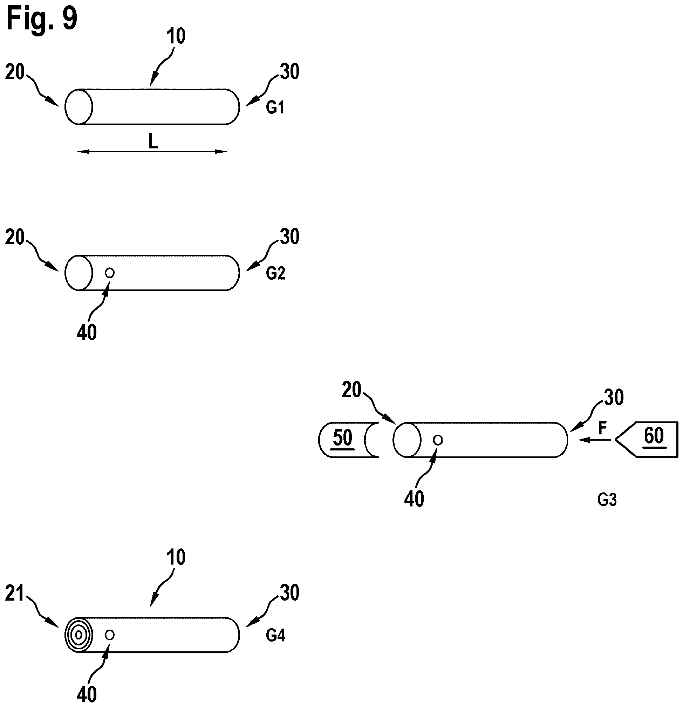

In a further (seventh) embodiment of the invention, a single sided closed tube is to be manufactured. The process of manufacturing a glass tube according to a seventh embodiment will be shown in reference to Fig. 9. In Fig. 9 at G1 shows providing a glass tube 10, with a length of L, having a first end 20 and a second end 30 at the distal ends of the tube 10.

In a step G2, shown in Fig. 9, a ventilation hole 40 is made into the wall of the glass tube near the first end 20 of the glass tube 10, by means of an opening tool 70. During and/or after the opening of the ventilation hole 40, the tube 10 can be blown out to replace air inside the tube.

In a following step G3, shown in Fig. 9, the end near the first end 20 of the tube is closed using a closing tool 50 (leading to a closed end 21), while blowing out the glass tube into the end 30 using a axial blow tool 60. The blowing out results in moving the air through the end opening 20 until this is closed, and through the ventilation hole 40.

In a subsequent step G4, a single ended closed tube 10 having a ventilation hole 40 near the closed end 21 is shown. This end product is suitable for further processing. Due to the blow out step G3, the resulting tube has also low defects.

In the abovementioned examples, the tools to replace the air in the interior of the glass tubes being processed used an air outlet to blow out the air. However, the invention can also be implemented by using suction to replace the air in the tubes by using a suction device to apply a (partial) vacuum to suck the air out of the tube (thereby replacing the air inside the tube).

Glass tubes that were processed using the method according to the invention resulted in tubes that were optically defect free with the test indicated above. The tubes were defect free immediately after manufacture and remained so even after being stored over an extended period of time, for example 7 days or longer. The storage circumstances like temperature and humidity are not critical.

### List of reference numerals

10 glass tube
20 open tube end
21 closed tube end
30 open tube end
31 closed tube end
40 ventilation hole
50 closing tool
60 gas supply
65 blow out tool
70 opening tool
80 radial gas supply
200 gas supply
210 axial gas supply section
220 lower radial gas supply section
220-2 upper radial gas supply section
211 gas inlet
212 inner chamber
213 perforated plate
221-2 gas inlet
222 inner chamber
222-2 inner chamber
223-2 upper radial gas outlet
223 radial gas outlet

## Claims

1. Method for the manufacture of a glass tube with closed ends and a ventilation hole, comprising the steps of
providing a glass tube (10) with open ends (20, 30),
opening a ventilation hole (40) in a wall of the glass tube (10) near one of the ends (20, 30) of the glass tube (10),
closing a first end (20, 30) of the glass tube (10),
closing a second end (20, 30) of the glass tube (10),
**characterized by**
introducing a gas (F) into the glass tube (10) through the ventilation hole (40) with a radial gas supply (80), during at least one of the closings of the first or second end of the glass tube.

2. Method according to claim 1, wherein during closing of the first end (20, 30) of the glass tube, a gas (F) is introduced into the glass tube (10) through the second open end (A3, B3, C2, D2, E2).

3. Method according to claim 1 or 2, wherein the glass tube is blown out after the ventilation hole (40) has been opened.

4. Method according to any of the claims 1-3, wherein the steps are performed in the following order:
a. providing (A1) a glass tube (10) with open ends (20, 30),
b. opening (A2) a ventilation hole (40) near the first end (20),
c. closing (A3) the end (20) near the ventilation hole (40),
d. closing (A4) the remaining open end (30) while introducing a gas (F) into the glass tube (10) through the ventilation hole (40) with a radial gas supply (80).

5. Method according to any of the claims 1-3, wherein the steps are performed in the following order:
a. providing (B1) a glass tube (10) with open ends (20, 30),
b. opening (B2) a ventilation hole (40) near the first end (20),
c. closing (B3) the end (30) opposite the ventilation hole (40),
d. closing (B4) the remaining open end (20) while introducing a gas (F) into the glass tube (10) through the ventilation hole (40) with a radial gas supply (80).

6. Method according to any of the claims 1-3, wherein the steps are performed in the following order:
a. providing (C1) a glass tube (10) with open ends (20, 30),
b. closing (C2) a first end (30) of the glass tube (10),
c. opening (C3) a ventilation hole (40) near the second end (20) while blowing out the glass tube with a nozzle head (65) positioned within the glass tube (10),
d. closing (C4) the remaining open end (20) while introducing a gas (F) into the glass tube (10) through the ventilation hole (40) with a radial gas supply (80).

7. Method according to any of the claims 1-3, wherein the steps are performed in the following order:
a. providing (D1) a glass tube (10) with open ends (20, 30),
b. closing (C2) a first end (30) of the glass tube (10),
c. opening (D3) a ventilation hole (40) near the first end (30),
d. closing (D4) the remaining open end (20) while introducing a gas (F) into the glass tube (10) through the ventilation hole (40) with a radial gas supply (80).

8. Method according to any of the preceding claims, wherein the gas (F) introduced has a relative humidity of maximum20%.

9. Method according to claim 8, wherein the gas (F) is air.

10. Closed glass tube with two closed ends and a ventilation hole in the vicinity of one closed end, enclosing an inner cavity having an inner wall **characterized by** the glass tube consisting of chloride refined borosilicate glass wherein the inner wall surface of the glass tube is free of NaCl dendritic crystal structures.

11. Glass tube according to claim 10, wherein the glass tube is a long-term stable glass tube.

12. Glass tube according to any of claims 10 or 11, wherein a first ventilation hole (40) is positioned near a first closed end of the glass tube, and a second ventilation hole (41) is positioned near the second closed end of the glass tube.

13. Glass tube according to claim 12, wherein both ventilation holes (40, 41) line up along an axial axis of the glass tube (10).

14. Glass tube according to any of the claims 10-13, wherein the glass tube is free of NaCl dendritic crystal structures in an area 5-15 cm (maximum 40 cm) from the respective ends of the tube.

15. Apparatus for processing glass tubes, comprising
an end closing tool (50) configured to close an end (20, 30) of a glass tube (10) to be processed, and a ventilation hole opening tool (70) configured to open an opening in a wall of the glass tube,
**characterized by** a radial gas supply (80) configured to provide a gas stream (F) directed towards the glass tube (10) in a radial direction with respect to the longitudinal axis of the glass tube (10).
